# EUROPEAN PATENT APPLICATION

(11) **EP 2 822 074 A1**
(43) Date of publication of application: **07.01.2015**
(21) Application number: 13755597.5
(22) Date of filing: 27.02.2013
(51) Int. Cl.: H01M 8/04, H01M 8/10

(54) **FUEL CELL SYSTEM AND CONTROL METHOD FOR FUEL CELL SYSTEM**

(30) Priority: 29.02.2012 JP 2012043942
(71) Applicant: Nissan Motor Co., Ltd, Yokohama-shi, Kanagawa 221-0023 (JP)
(72) Inventor: ICHIKAWA, Yasushi, Atsugi-shi Kanagawa 243-0123 (JP); IKEZOE, Keigo, Atsugi-shi Kanagawa 243-0123 (JP)
(74) Representative: Grünecker, Kinkeldey, Stockmair & Schwanhäusser
(86) International application number: PCT/JP2013/055079
(87) International publication number: WO 2013/129453

(57) **Abstract**

A fuel cell system that includes a pressure regulating valve configured to control a pressure of an anode gas to be supplied to a fuel cell, a buffer unit configured to store an anode off-gas discharged from the fuel cell, and a purge valve configured to control an amount to be discharged to an outside of the anode off-gas stored in the buffer unit, and that periodically increases/decreases the pressure of the anode gas by periodically opening/closing the pressure regulating valve, controls the purge valve so that a purge flow rate increases more during pressure reduction of the pulsation operation than during pressure increase in pulsation operation control.

## Description

### TECHNICAL FIELD

The present invention relates to a fuel cell system and a control method of a fuel cell system.

### BACKGROUND ART

A fuel cell system in which a normally-closed solenoid valve is provided in an anode gas supply passage and a normally-open solenoid valve and a recycle tank (buffer tank) are provided in order from an upstream in an anode gas discharge passage has been known (see JP2007-517369A). This fuel cell system is an anode gas non-circulating type fuel cell system in which an unused anode gas discharged into the anode gas discharge passage is not returned to the anode gas supply passage, and by periodically opening/closing the normally-closed solenoid valve and the normally-open solenoid valve, the unused anode gas stored in the recycle tank is made to flow backward into a fuel cell stack to be reused.

### SUMMARY OF INVENTION

However, in the above described prior-art fuel cell system, it has been found that during pressure reduction of a pulsation operation for periodically increasing/decreasing a pressure of the anode gas, anode gas concentration is lowered inside the fuel cell, and depending on the lowering degree of the anode gas concentration, power generation efficiency deteriorates.

The present invention has an object to provide a technology for suppressing the lowering of anode gas concentration inside the fuel cell during the pressure reduction of the pulsation operation for periodically increasing/ decreasing the pressure of the anode gas.

A fuel cell system in an embodiment includes a pressure regulating valve configured to control a pressure of an anode gas to be supplied to a fuel cell, a buffer unit configured to store an anode off-gas discharged from the fuel cell, a purge valve configured to control an amount to be discharged of the anode off-gas stored in the buffer unit, and a pulsation operation control means configured to periodically increase/decrease the pressure of the anode gas by periodically opening/closing the pressure regulating valve. In this fuel cell system, during pressure reduction of the pulsation operation, the purge valve is controlled so that a purge flow rate increases than that during pressure increase.

Embodiments of the present invention and merits of the present invention will be described below in detail together with the attached drawings.

### BRIEF DESCRIPTION OF DRAWINGS

[Fig. 1A] Fig. 1A is a diagram for explaining a configuration of a fuel cell system in a first embodiment and is a perspective view of a fuel cell.
[Fig. 1B] Fig. 1B is a diagram for explaining a configuration of a fuel cell system in the first embodiment and is a 1B-1B sectional view of the fuel cell in Fig. 1A.
[Fig. 2] Fig. 2 is an outline configuration diagram of an anode gas non-circulating type fuel cell system in the first embodiment.
[Fig. 3] Fig. 3 is a diagram for explaining a pulsation operation in a steady operation in which an operation state of the fuel cell system is constant.
[Fig. 4] Fig. 4 is a flowchart of pulsation operation control.
[Fig. 5] Fig. 5 is a flowchart of general purge control.
[Fig. 6] Fig. 6 is a diagram illustrating a relationship between a temperature and humidity of a fuel cell stack and a permeation amount of nitrogen.
[Fig. 7] Fig. 7 is a flowchart of opening/closing control of a purge valve performed by the fuel cell system in this embodiment.
[Fig. 8] Fig. 8 is a diagram illustrating an example of a temporal change of an anode pressure and a temporal change of an opening degree of the purge valve when the pulsation operation control and the purge valve opening/closing control are executed by the fuel cell system in the first embodiment.
[Fig. 9] Fig. 9 is a diagram illustrating an example of the temporal change of the anode pressure and the temporal change of the opening degree of the purge valve when the pulsation operation control and the purge valve opening/closing control are executed by a fuel cell system in a second embodiment.
[Fig. 10] Fig. 10 is a diagram illustrating an example of the temporal change of the anode pressure and a temporal change of a purge flow rate when the pulsation operation control and the purge valve opening/closing control are executed by a fuel cell system in a third embodiment.
[Fig. 11] Fig. 11 is a diagram illustrating an example of the temporal change of the anode pressure and the temporal change of the purge flow rate when the pulsation operation control and the purge valve opening/closing control are executed by a fuel cell system in a fourth embodiment.
[Fig. 12] Fig. 12 is a flowchart of opening/closing control of the purge valve performed by a fuel cell system in a fifth embodiment.
[Fig. 13] Fig. 13 is a diagram illustrating a relationship between a load and a pulsation period and whether or not opening/closing of the purge valve is to be synchronized with a pulsation period.
[Fig. 14] Fig. 14 is a diagram illustrating an example of the temporal change of the anode pressure and the temporal change of the opening degree of the purge valve when the pulsation operation control and the purge-valve opening/closing control are executed by a fuel cell system in a sixth embodiment.

### DESCRIPTION OF EMBODIMENTS

### - First embodiment -

A fuel cell generates power by sandwiching an electrolytic membrane by an anode electrode (fuel electrode) and a cathode electrode (oxidizer electrode) and by supplying an anode gas (fuel gas) containing hydrogen to the anode electrode and a cathode gas (oxidizer gas) containing oxygen to the cathode electrode. Electrode reactions progressing at both electrodes of the anode electrode and the cathode electrode are as follows:

Anode electrode: 2H₂ -> 4H⁺ + 4e- (1)

Cathode electrode: 4H⁺ + 4e- + O₂ -> 2H₂O (2)

By means of the electrode reactions in the formula (1) and the formula (2), the fuel cell generates an electromotive force at approximately 1 volt.

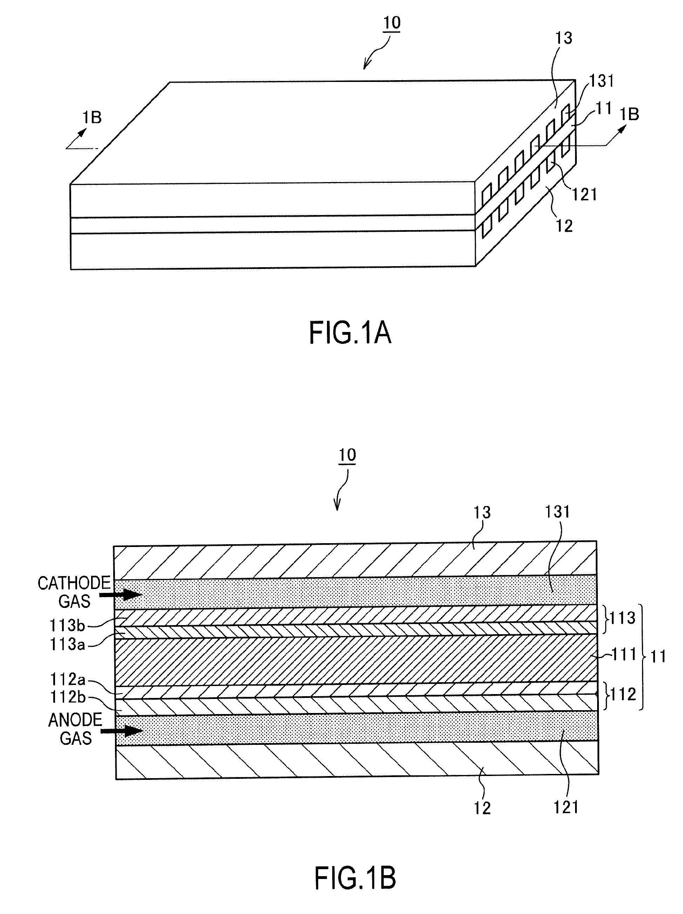

Figs. 1A and 1B are diagrams for explaining a configuration of a fuel cell system in a first embodiment. Fig. 1A is a perspective view of the fuel cell 10. Fig. 1B is a 1B-1B sectional view of the fuel cell in Fig. 1A.

The fuel cell 10 is composed by arranging an anode separator 12 and a cathode separator 13 on both front and back surfaces of a membrane electrode assembly (hereinafter referred to as an "MEA") 11.

The MEA 11 is provided with an electrolyte membrane 111, an anode electrode 112, and a cathode electrode 113. The MEA 11 has the anode electrode 112 on one of surfaces of the electrolyte membrane 111 and the cathode electrode 113 on the other surface.

The electrolyte membrane 111 is a proton conductive ion exchange membrane formed of a fluorine resin. The electrolyte membrane 111 shows a favorable electric conductivity in a wet state.

The anode electrode 112 is provided with a catalyst layer 112a and a gas diffusion layer 112b. The catalyst layer 112a is in contact with the electrolyte membrane 111. The catalyst layer 112a is formed of platinum or a carbon black particle supporting platinum or the like. The gas diffusion layer 112b is provided on an outer side (a side opposite to the electrolyte membrane 111) of the catalyst layer 112a and is in contact with the anode separator 12. The gas diffusion layer 112b is formed of a member having a sufficient gas diffusion characteristic and electric conductivity and is formed of a carbon cloth formed by weaving fibers made of a carbon fiber, for example.

The cathode electrode 113 is also provided with a catalyst layer 113a and a gas diffusion layer 113b similarly to the anode electrode 112.

The anode separator 12 is in contact with the gas diffusion layer 112b. The anode separator 12 has an anode gas channel 121 having a shape of a plurality of grooves for supplying the anode gas to the anode electrode 112 on a side in contact with the gas diffusion layer 112b.

The cathode separator 13 is in contact with the gas diffusion layer 113b. The cathode separator 13 has a cathode gas channel 131 having a shape of a plurality of grooves for supplying the cathode gas to the cathode electrode 113 on a side in contact with the gas diffusion layer 113b.

The anode gas flowing through the anode gas channel 121 and the cathode gas flowing through the cathode gas channel 131 flow in parallel with each other in the same direction. It may be so configured that they flow in parallel with each other in directions opposite to each other.

When such fuel cell 10 is used as a power source for a vehicle, since power in demand is large, the fuel cells 10 are used as a fuel cell stack in which several hundreds of the fuel cells 10 are laminated. Then, by constituting fuel cell system for supplying the anode gas and the cathode gas to the fuel cell stack, the power for driving a vehicle is taken out.

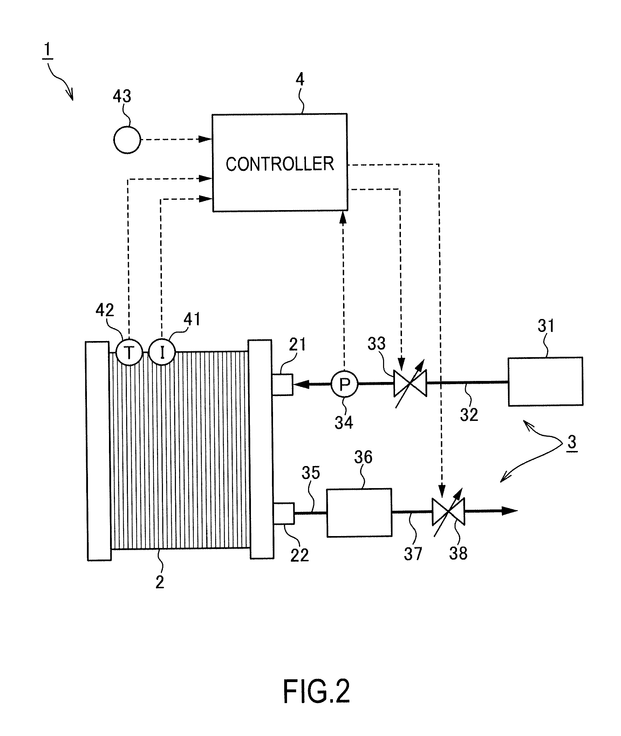

Fig. 2 is an outline configuration diagram of the anode gas non-circulating type fuel cell system in the first embodiment.

The fuel cell system 1 includes a fuel cell stack 2, an anode gas supply device 3, and a controller 4.

The fuel cell stack 2 is constructed by stacking a plurality of the fuel cells 10, and receives the supply of the anode gas and the cathode gas to generate the electric power required to drive the vehicle (for example, electric power required to drive a motor).

Regarding a cathode gas supply/discharge device for supplying/ discharging the cathode gas to the fuel cell stack 2 and a cooling device for cooling the fuel cell stack 2, since they are not major parts of the present invention, illustration is omitted for facilitation of understanding. In this embodiment, air is used as the cathode gas.

The anode gas supply device 3 is provided with a high pressure tank 31, an anode gas supply passage 32, a pressure regulating valve 33, a pressure sensor 34, an anode gas discharge passage 35, a buffer tank 36, a purge passage 37, and a purge valve 38.

The high pressure tank 31 stores the anode gas to be supplied to the fuel cell stack 2 while keeping it in a high pressure state.

The anode gas supply passage 32 is a passage for supplying the anode gas discharged from the high pressure tank 31 to the fuel cell stack 2, in which one end portion is connected to the high pressure tank 31 and the other end portion is connected to an anode gas inlet hole 21 of the fuel cell stack 2.

The pressure regulating valve 33 is provided in the anode gas supply passage 32. The pressure regulating valve 33 regulates the anode gas discharged from the high pressure tank 31 to a desired pressure and supplies it to the fuel cell stack 2. The pressure regulating valve 33 is an electromagnetic valve capable of adjusting an opening degree continuously or in steps, and the opening degree is controlled by the controller 4. The controller 4 controls the opening degree of the pressure regulating valve 33 by controlling an amount of an electric current to be supplied to the pressure regulating valve 33.

The pressure sensor 34 is provided in the anode gas supply passage 32 on a downstream from the pressure regulating valve 33. The pressure sensor 34 detects a pressure of the anode gas flowing through the anode gas supply passage 32 on the downstream from the pressure regulating valve 33. In this embodiment, the pressure of the anode gas detected by this pressure sensor 34 is used as a substitution for a pressure of an entire anode system including each of the anode gas channels 121 and the buffer tank 36 inside the fuel cell stack (hereinafter referred to as an "anode pressure").

The anode gas discharge passage 35 has one end portion connected to an anode gas outlet hole 22 of the fuel cell stack 2 and the other end portion connected to an upper part of the buffer tank 36. Into the anode gas discharge passage 35, a mixture gas of an excess anode gas not used for the electrode reaction and an impurity gas such as nitrogen, steam and the like cross-leaked from the cathode side to the anode gas channel 121 (hereinafter referred to as an "anode off-gas") is discharged.

The buffer tank 36 temporarily stores the anode off-gas having flowed through the anode gas discharge passage 35. A part of the steam in the anode off-gas condenses in the buffer tank 36 and becomes liquid water and is separated from the anode off-gas.

The purge passage 37 has one end portion connected to a lower part of the buffer tank 36. The other end portion of the purge passage 37 is an opening end. The anode off-gas and the liquid water stored in the buffer tank 36 are discharged to the outside air from the opening end through the purge passage 37.

The purge valve 38 is provided in the purge passage 37. The purge valve 38 is an electromagnetic valve capable of adjusting an opening degree continuously or in steps, and the opening degree is controlled by the controller 4. By adjusting the opening degree of the purge valve 38, an amount of the anode off-gas discharged from the buffer tank 36 to the outside air through the purge passage 37 is adjusted so that anode gas concentration in the buffer tank 36 becomes a certain level or less. That is because, if the anode gas concentration in the buffer tank 36 is too high, the anode gas amount discharged from the buffer tank 36 to the outside air through the purge passage 37 becomes too large, which is wasteful.

The controller 4 is constituted by a microcomputer provided with a central processing unit (CPU), a read-only memory (ROM), a random-access memory (RAM), and an input/output interface (I/O interface).

Into the controller 4, in addition to the above described pressure sensor 34, signals for detecting an operation state of the fuel cell system 1 such as a current sensor 41 for detecting an output current of the fuel cell stack 2, a temperature sensor 42 for detecting a temperature of cooling water for cooling the fuel cell stack 2 (hereinafter referred to as a "cooling water temperature"), an accelerator stroke sensor 43 for detecting a stepped-on amount of an accelerator pedal (hereinafter referred to as an "accelerator operation amount") and the like are inputted.

The controller 4 periodically opens/closes the pressure regulating valve 33 on the basis of these input signals and performs a pulsation operation for periodically increasing/decreasing the anode pressure and moreover, adjusts a flow rate of the anode off-gas discharged from the buffer tank 36 by adjusting the opening degree of the purge valve 38 so that the anode gas concentration in the buffer tank 36 is kept at a certain level or less.

In the case of the anode gas non-circulating fuel cell system 1, if the anode gas is continuously supplied from the high pressure tank 31 to the fuel cell stack 2 with the pressure regulating valve 33 left open, the anode off-gas containing unused anode gas discharged from the fuel cell stack 2 is continuously discharged from the buffer tank 36 to the outside air through the purge passage 37, which is wasteful.

Thus, in this embodiment, the pressure regulating valve 33 is periodically opened/closed, and a pulsation operation for periodically increasing/decreasing the anode pressure is performed. By performing the pulsation operation, the anode off-gas stored in the buffer tank 36 can be made to flow backward to the fuel cell stack 2 during pressure reduction of the anode pressure. As a result, since the anode gas in the anode off-gas can be reused, the anode gas amount discharged to the outside air can be reduced, and a waste can be eliminated.

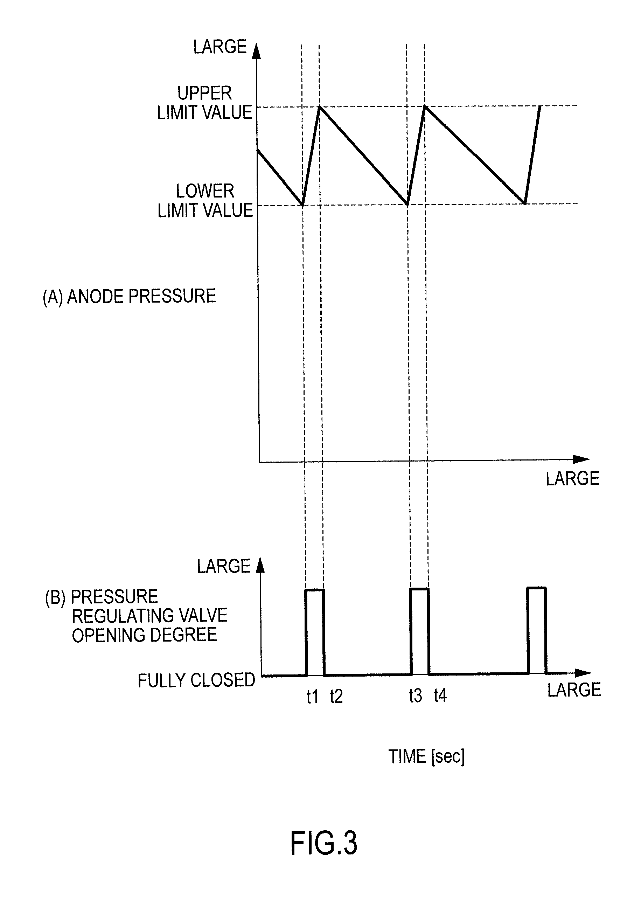

Fig. 3 is a diagram for explaining the pulsation operation in a steady operation in which the operation state of the fuel cell system 1 is constant.

As illustrated in Fig. 3(A), the controller 4 calculates a target output of the fuel cell stack 2 on the basis of the operation state (a load of the fuel cell stack) of the fuel cell system 1 and sets an upper limit value and a lower limit value of the anode pressure according to the target output. Then, the anode pressure is periodically increased/decreased between the set upper limit value and lower limit value of the anode pressure.

Specifically, if the anode pressure reaches the lower limit value at time t1, as illustrated in Fig. 3(B), the pressure regulating valve 33 is opened to an opening degree at which at least the anode pressure can be increased to the upper limit value. In this state, the anode gas is supplied from the high pressure tank 31 to the fuel cell stack 2 and is discharged to the buffer tank 36.

If the anode pressure reaches the upper limit value at time t2, as illustrated in Fig. 3(B), the pressure regulating valve 33 is fully closed, and supply of the anode gas from the high pressure tank 31 to the fuel cell stack 2 is stopped. Then, by means of the above described electrode reaction in (1), the anode gas remaining in the anode gas channel 121 in the fuel cell stack is consumed with elapse of time, the anode pressure lowers by a consumed amount of the anode gas.

Moreover, if the anode gas remaining in the anode gas channel 121 is consumed, since the pressure of the buffer tank 36 becomes higher than the pressure of the anode gas channel 121 temporarily, the anode off-gas flows backward from the buffer tank 36 to the anode gas channel 121. As a result, the anode gas remaining in the anode gas channel 121 and the anode gas in the anode off-gas having flowed backward to the anode gas channel 121 are consumed with elapse of time, and the anode pressure is further lowered.

If the anode pressure reaches the lower limit value at time t3, the pressure regulating valve 33 is opened similarly to the time t1. Then, if the anode pressure reaches the upper limit value again at time t4, the pressure regulating valve 33 is fully closed.

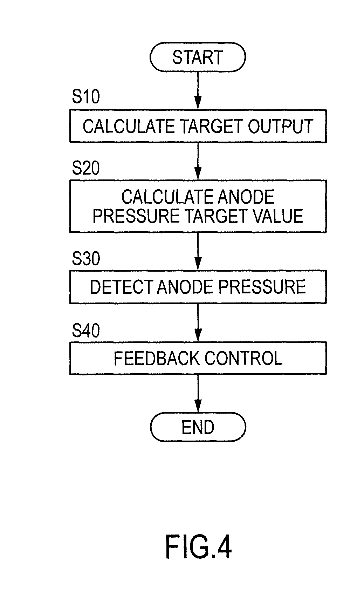

Fig. 4 is a flowchart of the pulsation operation control. Processing starting at Step S10 is executed by the controller 4.

At Step S10, on the basis of the operation state of the fuel cell system 1, the target output of the fuel cell stack 2 is calculated.

At Step S20, on the basis of the target output of the fuel cell stack 2 calculated at Step S10, the upper limit value and the lower limit value of the anode pressure during the pulsation operation are set, and on the basis of the set upper limit value and lower limit value, the anode pressure target value is determined. During an increase of the anode pressure, the upper limit value is the anode pressure target value, while during a drop of the pressure, the lower limit value is the anode pressure target value.

At Step S30, the anode pressure is detected by the pressure sensor 34.

At Step S40, on the basis of a difference between the anode pressure target value determined at Step S20 and the anode pressure detected at Step S30, feedback control for controlling opening/closing of the pressure regulating valve 33 is performed so that the anode pressure gets closer to the anode pressure target value.

Here, during a pressure drop of the pulsation operation, since the anode gas remaining in the anode gas channel 121 is consumed, if the pressure in the buffer tank 36 becomes higher than the pressure of the anode gas channel 121, the anode off-gas flows backward from the buffer tank 36 side to the anode gas channel 121. Then, at a merging portion of the anode gas flowing to the buffer tank 36 side through the anode gas channel 121 and the anode off-gas flowing backward from the buffer tank 36 side to the anode gas channel 121, the anode gas concentration lowers to the minimum. Particularly, the anode gas concentration at a position where the anode gas concentration is the minimum becomes the lowest immediately before a pressure rise of the pulsation operation.

Therefore, in the fuel cell system in this embodiment, by opening the purge valve 38 at the pressure drop of the pulsation operation, a backflow of the anode off-gas from the buffer tank 36 side to the anode gas channel 121 is prevented, and lowering of the anode gas concentration is suppressed.

Before explaining the opening/closing control of the purge valve 38 at the pressure drop of the pulsation operation, general opening/closing control of the purge valve 38 will be explained.

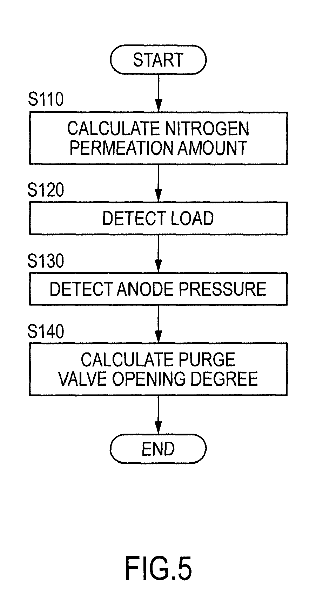

Fig. 5 is a flowchart of general purge control.

At Step S110, a permeation amount of nitrogen permeated from the cathode side to the anode side through the electrolyte membrane is calculated.

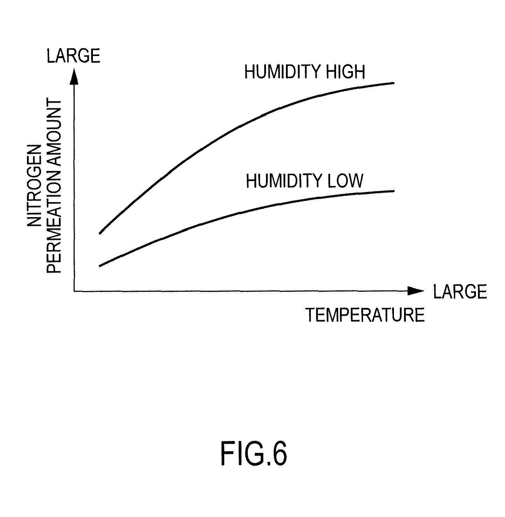

Fig. 6 is a diagram illustrating a relationship between a temperature and humidity of the fuel cell stack 2 and the permeation amount of nitrogen. As illustrated in Fig. 6, the higher the temperature of the fuel cell stack 2 is and the higher the humidity is, the larger the permeation amount of nitrogen becomes. Here, as the temperature of the fuel cell stack 2, a temperature detected by the temperature sensor 42 is used, and humidity is acquired on the basis of high frequency resistance (HFR). At Step S110, the temperature and humidity of the fuel cell stack 2 are acquired, and by referring a table having a relationship as illustrated in Fig. 6 prepared in advance, a permeation amount of nitrogen is calculated.

At Step S120, a load connected to the fuel cell stack 2 (a target output of the fuel cell stack 2) is detected.

At Step S130, the anode pressure is detected by the pressure sensor 34.

At Step S140, on the basis of the nitrogen permeation amount calculated at Step S110, the load detected at Step S120, and the anode pressure detected at Step S130, an opening degree of the purge valve 38 required to purge nitrogen is calculated. That is, the larger the nitrogen permeation amount is, the larger the load is, and the higher the anode pressure is, the larger the opening degree of the purge valve 38 is set.

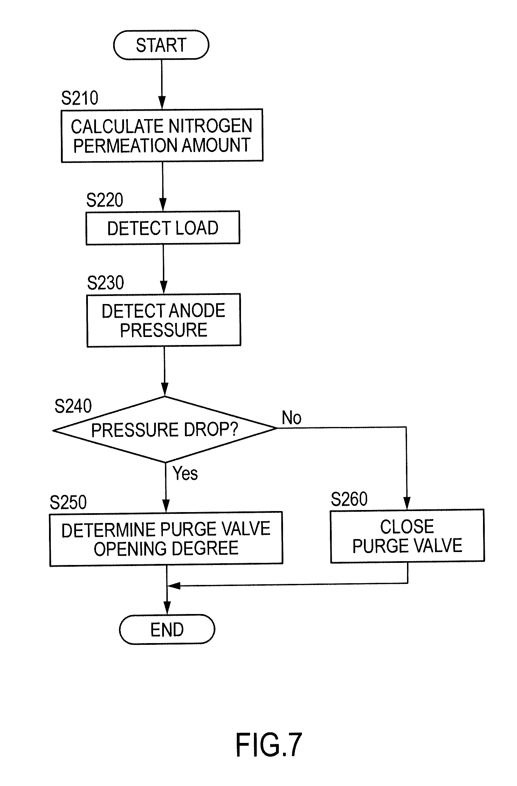

Fig. 7 is a flow chart of the opening/closing control of the purge valve 38 executed by the fuel cell system in this embodiment. Processing starting at Step S210 is executed by the controller 4 during pulsation operation control for periodically increasing/decreasing the anode pressure.

At Step S210, the permeation amount of nitrogen permeated from the cathode side to the anode side through the electrolyte membrane is calculated. This processing is the same as the processing at Step S110 in Fig. 6.

At Step S220, the load to the fuel cell stack 2 (the target output of the fuel cell stack 2) is detected.

At Step S230, the anode pressure is detected by the pressure sensor 34.

At Step S240, it is determined whether or not pressure down control for lowering the anode pressure is on the way. If it is determined that the pressure down control is on the way, the routine proceeds to Step S250, while if it is determined that pressure up control is on the way, the routine proceeds to Step S260.

At Step S250, on the basis of the nitrogen permeation amount calculated at Step S210, the load detected at Step S220, and the anode pressure detected at Step S230, the opening degree of the purge valve 38 required to purge nitrogen is calculated. That is, the larger the nitrogen permeation amount is, the larger the load is, and the higher the anode pressure is, the larger the opening degree of the purge valve 38 is set.

On the other hand, at Step S260, the purge valve 38 is closed.

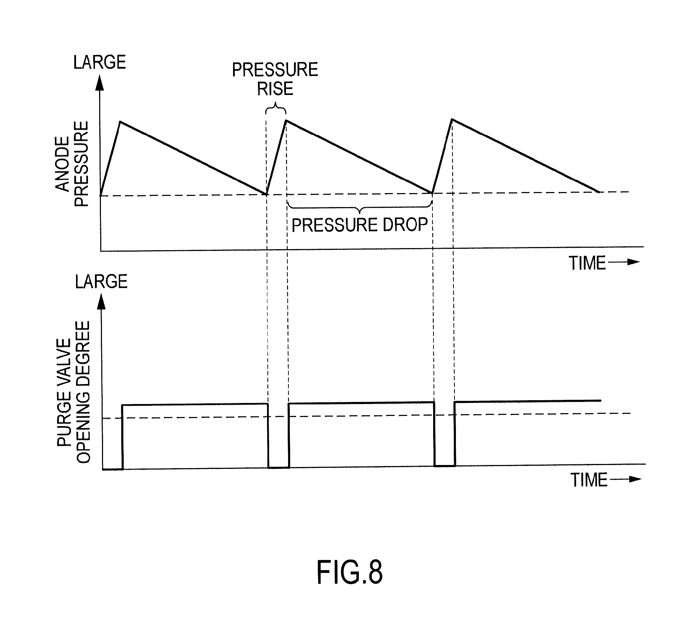

Fig. 8 is a diagram illustrating an example of a temporal change of the anode pressure and a temporal change of the opening degree of the purge valve when the pulsation operation control and the purge valve opening/closing control are executed by the fuel cell system in the first embodiment. In the diagram illustrating the temporal change of the opening degree of the purge valve, a control result of a related art technology in which the opening degree of the purge valve is constant is indicated by a dotted line, and the control result of this embodiment is indicated by a solid line.

As illustrated in Fig. 8, the purge valve 38 is opened only during a pressure drop in the pulsation operation for periodically increasing/ decreasing the anode pressure, and the purge valve 38 is closed during a pressure rise. As a result, a backflow of the anode off-gas from the buffer tank 36 side to the anode gas channel 121 during the pressure drop can be prevented, and thus, lowering of the anode gas concentration inside the fuel cell stack 2 can be suppressed.

As described above, the fuel cell system in the first embodiment includes the buffer tank 36 for storing the anode off-gas discharged from the fuel cell, which is configured to perform the pulsation operation in which the pressure of the anode gas is periodically increased/decreased by periodically opening/closing the pressure regulating valve 33, controls the opening/closing of the purge valve 38 in accordance with the period of pressure increase/decrease so that the purge valve 38 is opened during the pressure reduction of the pulsation operation. As a result, during the pressure drop, the backflow of the anode off-gas from the buffer tank 36 side to the anode gas channel 121 can be prevented, and thus, lowering of the anode gas concentration inside the fuel cell stack 2 can be suppressed.

### - Second embodiment -

In the fuel cell system in the first embodiment, when the pressure rise process of the anode pressure ends, and the pressure drop process starts during the pulsation operation control, the purge valve 38 is opened (see Fig. 8). However, at the beginning in the pressure drop process, since lowering of the anode gas concentration is small, the backflow of the anode off-gas from the buffer tank 36 is less, and necessity to open the purge valve 38 is low.

Therefore, in the fuel cell system in a second embodiment, control is made such that the purge valve 38 is opened in the middle of the pressure drop process.

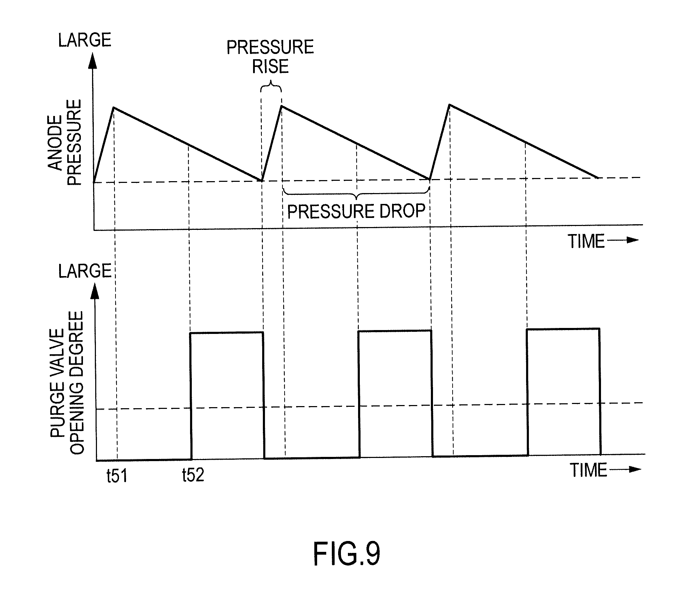

Fig. 9 is a diagram illustrating an example of the temporal change of the anode pressure and the temporal change of the opening degree of the purge valve when the pulsation operation control and the purge valve opening/closing control are executed by the fuel cell system in the second embodiment. At time t51, the pressure drop of the anode pressure is started, but at time t52 in the middle of the pressure drop, the purge valve 38 is opened. Timing for opening the purge valve 38 can be set at arbitrary timing. For example, it may be set after a predetermined time has elapsed since the pressure drop is started or after the anode pressure has dropped by a predetermined amount.

As described above, according to the fuel cell system in the second embodiment, since the opening/closing of the purge valve 38 is controlled so that the purge valve 38 is opened in the middle of pressure reduction of the pulsation operation, by opening the purge valve 38 at an appropriate timing, wasteful discharge of the anode gas is suppressed, while lowering of the anode gas concentration inside the fuel cell stack 2 can be suppressed.

### - Third embodiment -

In the fuel cell system in a third embodiment, the opening degree of the purge valve 38 is controlled so that a purge flow rate becomes substantially constant even if the anode pressure lowers.

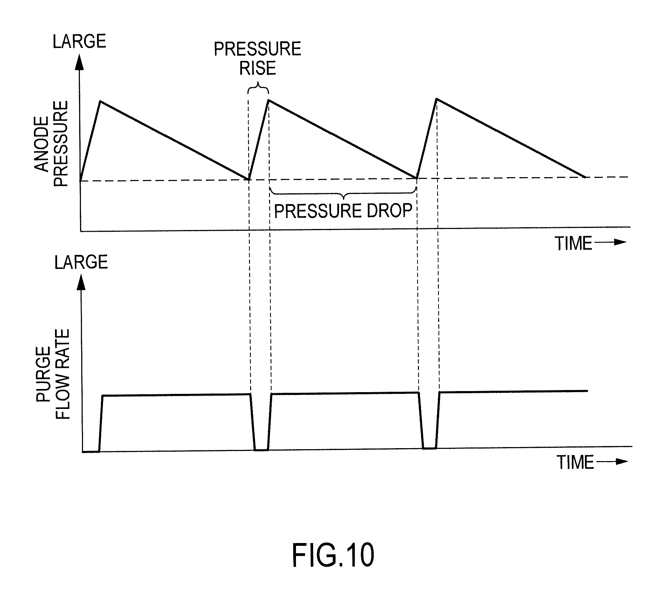

Fig. 10 is a diagram illustrating an example of the temporal change of the anode pressure and a temporal change of the purge flow rate when the pulsation operation control and the purge valve opening/closing control are executed by the fuel cell system in the third embodiment. If the opening degree of the purge valve 38 is set constant during a drop of the anode pressure, the purge flow rate decreases as the pressure drops. Therefore, in the fuel cell system in the third embodiment, the opening degree of the purge valve 38 is increased with the pressure drop so that the purge flow rate becomes substantially constant even if the anode pressure lowers. As a result, the backflow of the anode off-gas from the buffer tank 36 side to the anode gas channel 121, caused by the decrease in the purge flow rate, can be effectively prevented, and lowering of the anode gas concentration inside the fuel cell stack 2 can be suppressed.

As described above, the fuel cell system in the third embodiment controls the opening/closing of the purge valve 38 so that the purge flow rate during the pressure reduction period of the pulsation operation becomes substantially constant. With this, the backflow of the anode off-gas from the buffer tank 36 side to the anode gas channel 121, caused by the decrease in the purge flow rate during the pressure reduction of the anode pressure, can be effectively prevented, and lowering of the anode gas concentration inside the fuel cell stack 2 can be suppressed more effectively.

### - Fourth embodiment -

The anode gas concentration in the anode gas channel 121 decreases in an accelerated manner with elapse of the pressure drop time. Therefore, in the fuel cell system in a fourth embodiment, by increasing the purge flow rate in an accelerated manner with the elapse of the pressure drop time, the backflow of the anode off-gas from the buffer tank 36 side to the anode gas channel 121 is effectively prevented, and lowering of the anode gas concentration inside the fuel cell stack 2 is suppressed.

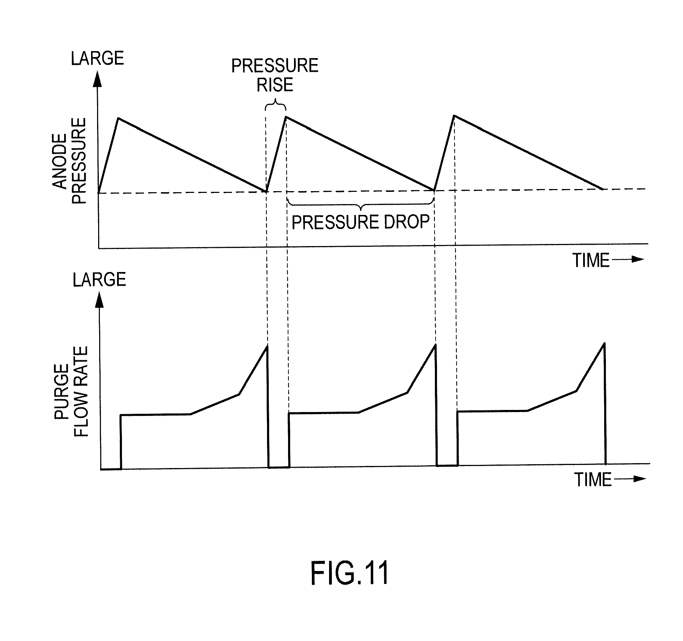

Fig. 11 is a diagram illustrating an example of the temporal change of the anode pressure and the temporal change of the purge flow rate when the pulsation operation control and the purge valve opening/closing control are executed by the fuel cell system in the fourth embodiment. By increasing the opening degree of the purge valve 38 with elapse of the pressure drop time, the purge flow rate increases in an accelerated manner.

As described above, the fuel cell system in the fourth embodiment controls the opening/closing of the purge valve 38 so that the purge flow rate increases in accordance with elapse of the pressure reduction period of the pulsation operation. With this, the backflow of the anode off-gas from the buffeter tank 36 side to the anode gas channel 121 can be effectively prevented, and lowering of the anode gas concentration inside the fuel cell stack 2 can be effectively suppressed.

### - Fifth embodiment -

In a state in which a load to the fuel cell stack 2 is high, that is, if a required output of the fuel cell stack 2 becomes large, a pulsation period during the pulsation operation control becomes short. In this case, in order to execute control in which the purge valve 38 is opened during the pressure drop and the purge valve 38 is closed during the pressure rise in accordance with the pulsation period, an expensive purge valve with favorable responsiveness needs to be used.

In the fuel cell system in a fifth embodiment, if the required output of the fuel cell stack 2 is large at a high load, opening/closing of the purge valve 38 is not synchronized with the pulsation period.

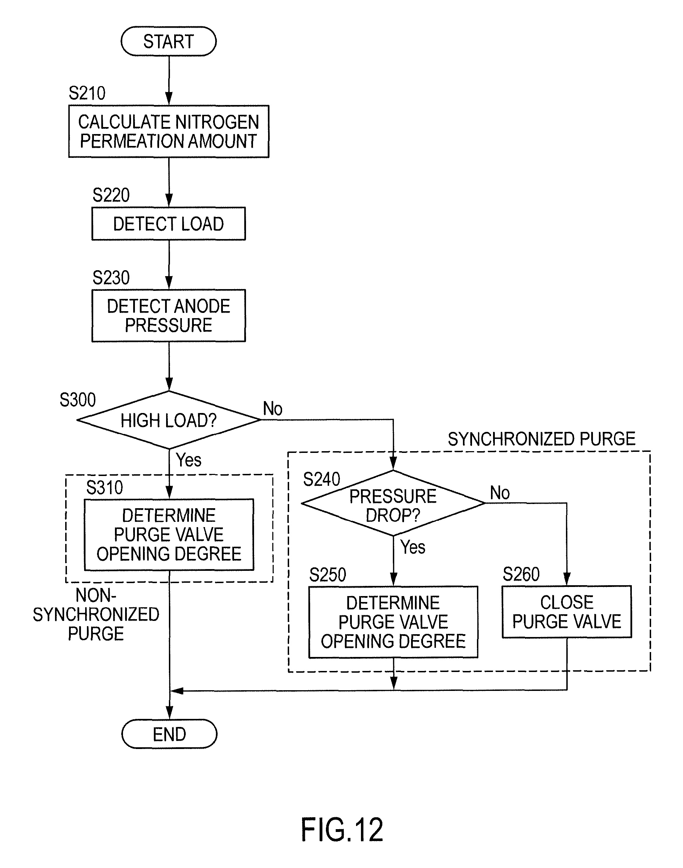

Fig. 12 is a flowchart of the opening/closing control of the purge valve 38 executed by the fuel cell system in the fifth embodiment. For the steps in which the same processing as those in the flowchart illustrated in Fig. 7 is executed are given the same reference numerals, and the detailed explanation will be omitted.

At Step S300 subsequent to Step S230, it is determined whether or not it is in a high load state, that is, whether or not the required output of the fuel cell stack 2 is large. Here, if the required output of the fuel cell stack 2 is a predetermined output or more, it is determined to be a high load state. If it is determined to be a high load state, the routine proceeds to Step S310.

At Step S310, the opening degree of the purge valve 38 is determined. The opening degree of the purge valve 38, here, is set to a value not synchronized with the pulsation period of the anode pressure. That is, the purge valve 38 might be opened during the pressure rise, or a state in which the purge valve 38 is kept closed might be presented even during the pressure drop.

On the other hand, if it is determined at Step S300 that the state is not a high load state, the routine proceeds to Step S240. The processing at Steps S240 to S260 is the same as the processing in the flowchart illustrated in Fig. 7. The opening/closing control of the purge valve 38 executed at Steps S240 to S260 is control synchronized with the pulsation period of the anode pressure as described in the first embodiment.

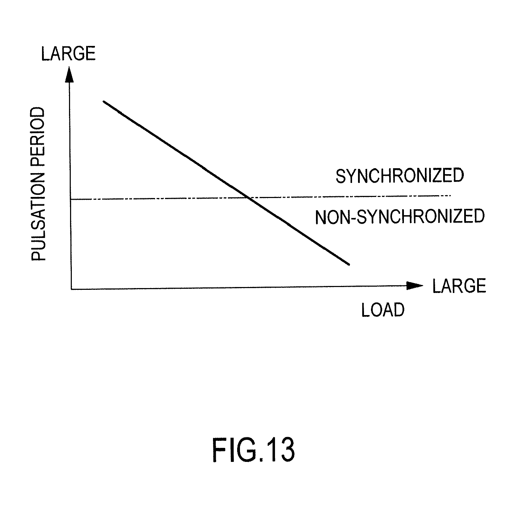

Fig. 13 is a diagram illustrating a relationship between a load and a pulsation period and whether or not the opening/closing of the purge valve 38 is to be synchronized with the pulsation period. As illustrated in Fig. 13, the higher the load is, the shorter the pulsation period becomes. Moreover, if the load is high, that is, if the pulsation period is short, the opening/closing of the purge valve 38 is not synchronized with the pulsation period.

As described above, according to the fuel cell system in the fifth embodiment, if the required output of the fuel cell is larger than the predetermined output, the opening/closing control of the purge valve 38 in accordance with the period of pressure increase/decrease is not executed, and thus, even if a purge valve with poor responsiveness is used, lowering of the anode gas concentration inside the fuel cell stack 2 during the pressure drop of the pulsation operation can be suppressed. That is, even if the pulsation period becomes short in the high load state, by opening/closing the purge valve 38 without synchronization with the pulsation period, the backflow of the anode off-gas from the buffer tank 36 side to the anode gas channel 121 can be prevented, and lowering of the anode gas concentration inside the fuel cell stack 2 can be suppressed.

### - Sixth embodiment -

In the first to fifth embodiments, when the pressure drop process of the pulsation operation ends, and the pressure rise process starts, an unburned anode gas enters the buffer tank 36, and thus, in order to suppress discharge of the high concentration anode gas to the outside air, the purge valve 38 is controlled to be closed at timing when the pressure rise process starts. However, for a certain period of time even after the pressure rise process starts, the unburned anode gas does not enter the buffer tank 36. Moreover, since the pressure sensor 34 is provided on the upstream side of the fuel cell stack 2, time delay is caused until the anode pressure on the downstream side close to the buffer tank 36 accords with the anode pressure detected by the pressure sensor 34. Therefore, for a certain period of time even after the pressure rise process starts, it is less likely that the high concentration anode gas is discharged to the outside air even if the purge valve 38 is left open without being closed, and low concentration anode gas in the buffer tank 36 can be discharged to the outside air.

Therefore, in the fuel cell system in a sixth embodiment, the purge valve 38 is left open without being closed at timing when the pressure rise process starts, and the purge valve 38 is controlled to be closed in the middle of the pressure rise process.

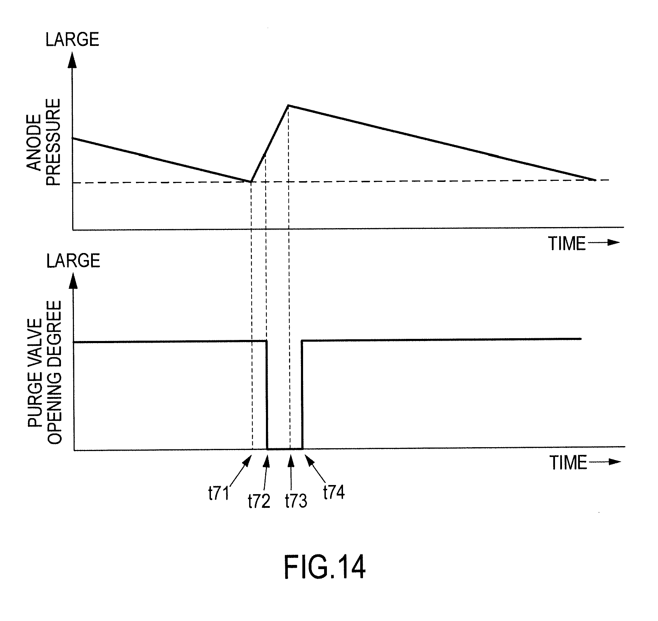

Fig. 14 is a diagram illustrating an example of the temporal change of the anode pressure and the temporal change of the opening degree of the purge valve when the pulsation operation control and the purge valve opening/closing control are performed by the fuel cell system in a sixth embodiment. Though the pressure drop process of the pulsation operation is finished at time t71, the purge valve 38 is left open without being closed. Then, at time t72 in the middle of the pressure rise process, the purge valve 38 is closed.

Here, a period from when the pressure drop process is finished till when the purge valve 38 is closed is set to an appropriate value by considering a position where the pressure sensor 34 is provided, a capacity in the anode system and the like.

Moreover, at time t73, though the pressure rise process of the pulsation operation is finished, the purge valve 38 is not closed, but at time t74 in the middle of the pressure drop process, the purge valve 38 is opened. That is because time delay occurs until the anode pressure on the downstream side close to the buffer tank 36 accords with the anode pressure detected by the pressure sensor 34 and since lowering of the anode gas concentration is small for a certain period of time after the pressure drop process starts, there is less backflow of the anode off-gas from the buffer tank 36, and necessity to open the purge valve 38 is low.

As described above, according to the fuel cell system in the sixth embodiment, even if the pressure reduction of the pulsation operation is finished, the purge valve 38 is left open, and the purge valve 38 is closed in the middle of the pressure increase and thus, for a certain period of time after the pressure reduction of the pulsation operation is finished, low concentration anode gas can be discharged to the outside air.

The present invention is not limited to each of the above described embodiments. For example, the example in which the fuel cell system is mounted on a vehicle was described, but the present invention can be applied to various systems other than the vehicle.

This application claims priority based on Japanese Patent Application No. 2012-043942, filed with the Japan Patent Office, on February 29, 2012, the entire contents of which are expressly incorporated herein by reference.

## Claims

1. A fuel cell system configured to generate power by supplying an anode gas and a cathode gas to a fuel cell, comprising:
a pressure regulating valve configured to control a pressure of the anode gas to be supplied to the fuel cell;
a buffer unit configured to store an anode off-gas discharged from the fuel cell;
a purge valve configured to control an amount to be discharged of the anode off-gas stored in the buffer unit;
a pulsation operation control means configured to periodically increase/decrease the pressure of the anode gas on a downstream from the pressure regulating valve by periodically opening/closing the pressure regulating valve; and
a purge valve control means configured to control the purge valve so that a purge flow rate increases more during pressure reduction of the pulsation operation than during pressure increase in pulsation operation control in which the pressure of the anode gas is periodically increased/ decreased.

2. The fuel cell system according to claim 1, wherein
the purge valve control means controls opening/closing of the purge valve so that the purge valve is opened in the middle of the pressure reduction of the pulsation operation.

3. The fuel cell system according to claim 1, wherein
the purge valve control means controls the opening/closing of the purge valve so that a purge flow rate during a pressure reduction period of the pulsation operation becomes substantially constant.

4. The fuel cell system according to claim 1, wherein
the purge valve control means controls the opening/closing of the purge valve so that the purge flow rate increases in accordance with elapse of the pressure reduction period of the pulsation operation.

5. The fuel cell system according to any one of claims 1 to 4, wherein
the purge valve control means does not execute the opening/closing control of the purge valve in accordance with a period of pressure increase/decrease if a required output of the fuel cell is larger than a predetermined output.

6. The fuel cell system according to any one of claims 1 to 5, wherein
the purge valve control means leaves the purge valve open even if the pressure reduction of the pulsation operation is finished and closes the purge valve in the middle of the pressure increase.

7. A control method of a fuel cell system that includes a pressure regulating valve configured to control a pressure of an anode gas to be supplied to a fuel cell, a buffer unit configured to store an anode off-gas discharged from the fuel cell, and a purge valve configured to control an amount to be discharged of the anode off-gas stored in the buffer unit, and that generates power by supplying the anode gas and the cathode gas to the fuel cell, comprising:
periodically increasing/decreasing a pressure of the anode gas on a downstream from the pressure regulating valve by periodically opening/closing the pressure regulating valve; and
controlling the purge valve so that a purge flow rate increases more during pressure reduction of the pulsation operation than during pressure increase in pulsation operation control in which the pressure of the anode gas is periodically increased/decreased.
